# EUROPEAN PATENT APPLICATION

(11) **EP 3 546 534 A1**
(43) Date of publication of application: **02.10.2019**
(21) Application number: 19166394.7
(22) Date of filing: 29.03.2019
(51) Int. Cl.: C09D 11/322, C09D 11/36

(54) **INK JET COMPOSITION AND RECORDING MATTER**

(30) Priority: 29.03.2018 JP 2018063935
(71) Applicant: Seiko Epson Corporation, Tokyo 160-8801 (JP)
(72) Inventor: KIDA, Hiroaki, Suwa-shi, Nagano 392-8502 (JP); TAKIGUCHI, Hiroshi, Suwa-shi, Nagano 392-8502 (JP); ASAI, Shintaro, Suwa-shi, Nagano 392-8502 (JP); TERADA, Masaru, Suwa-shi, Nagano 392-8502 (JP); TOYODA, Naoyuki, Suwa-shi, Nagano 392-8502 (JP)
(74) Representative: Miller Sturt Kenyon

(57) **Abstract**

An ink jet composition of the invention is discharged by an ink jet method and includes: metal powder; an organic solvent; and a resin having a styrene-acrylic acid structure as a binder resin, in which the ink jet composition contains metal powder surface-treated with a fluorine-based compound as the metal powder.

## Description

### BACKGROUND

### 1. Technical Field

The present invention relates to an ink jet composition and a recorded matter.

### 2. Related Art

In the related art, metal plating, foil press printing using metal foil, heat transferring using metal foil, or the like have been adopted as methods for manufacturing ornaments exhibiting a glossy appearance.

However, in these methods, there is a problem in that it is difficult to form a fine pattern or to apply the methods to a curved surface portion. In foil press printing, there is are additional problems in that it is impossible to print metallic tones with gradation, it is difficult to prinht on-demand and it is difficult to cope with multiproduct production.

An ink jet method is used for recording on a recording medium with a composition containing a pigment or a dye. The ink jet method is excellent in that it can also be suitably used for formation of a fine pattern and recording on a curved surface. A composition (ink jet composition) obtained by dispersing or dissolving a coloring agent (a pigment or a dye) in an organic solvent is used (for example, refer to JP-A-2007-161844) since it is advantageous particularly in that a thickness of a printed layer can be reduced and the composition can be uniformly wet-spread.

However, in ink jet compositions, comprising a metal powder instead of a pigment or a dye, there is a problem in that arrangement of the metal powder after printing is disturbed and it is impossible to obtain characteristics such as the gloss originally possessed by the metal. There are additional problems such as deterioration in discharge stability or gloss due to oxidative deterioration of the metal powder and an increase in viscosity accompanied by aggregation. In addition, there is also a problem of inferior adhesiveness to a recording medium at a recorded portion (printed portion) formed using the composition.

### SUMMARY

The invention can be realized in the following aspects.

According to an aspect of the invention, there is provided an ink jet composition suitable for discharge by an ink jet method, comprising: metal powder; an organic solvent; and a resin having a styrene-acrylic acid structure as a binder resin, wherein the metal powder has been surface-treated with a fluorine-based compound.

### DESCRIPTION OF EXEMPLARY EMBODIMENTS

Hereinafter, details of the invention will be described.

### Ink Jet Composition

First, an ink jet composition of the invention will be described.

An ink jet composition of the invention is an ink jet composition suitable for discharge by an ink jet method. The ink jet composition comprises: metal powder; an organic solvent; and a resin having a styrene-acrylic acid structure as a binder resin, wherein the metal powder has been surface-treated with a fluorine-based compound.

In the ink composition of the invention, the metal powder has excellent chemical stability and dispersion stability and the ink jet composition has excellent discharge stability over a long period of time. In addition, recorded matter produced using the ink jet composition, exhibits characteristics such as the high gloss originally possessed by the metal material from which the metal powder was formed. Furthermore, in recorded matter produced using the ink jet composition, printed portions have excellent adhesiveness to a recording medium and the recorded matter has excellent durability. Typically, ink jet compositions comprising metal powder which has been surface-treated with a fluorine-based compound for the purpose of enhancing dispersibility in the ink jet composition, exhibit problems such as deterioration in the adhesiveness of the printed portion in recorded matter produced using the ink jet composition. However, using the composition of the invention, it is possible to ensure both that the printed portion formed using the ink jet composition has excellent adhesiveness to a recording medium while enjoying benefits caused by surface treatment of metal powder with a fluorine-based compound and that the recorded matter has excellent durability. In addition, it is possible to effectively prevent oxidation of metal powder due to ozone, oxygen, or the like, and to stably exhibit an excellent glossy feeling over a long period of time. In addition, even when an organic solvent having low surface tension is used as a constituent material of the ink jet composition, it is possible to achieve consistently a suitable arrangement (leafing) of the metal powder in the vicinity of the outer surface of the printed portion of recorded matter produced using the ink jet composition such that the printed portion exhibits the gloss originally possessed by the metal material from which the metal powder was formed. Accordingly, it is possible to select from a wider range of organic solvents is widened, and this means that the characteristics of the ink jet composition (such as the viscosity, the storage stability, and the discharge stability of the ink jet composition) can be easily adjusted without sacrificing the gloss of the printed portion of the image.

### Metal Powder

As described above, the ink jet composition of the invention comprises metal powder which has been surface-treated with a fluorine-based compound.

### Base Particles

First, base particles will be described. In the present specification, base particles are particles comprising a metal material, wherein the particles are intended to be subjected to surface treatment with a fluorine-based compound.

The base particles are particles in which at least a region including the vicinity of the surface comprises a metal material. For example, the base particles may either be entirely made of a metal material or, alternatively, may include a core portion made of a non-metal material and a coating layer made of a metal material covering the core portion.

The metal material of the base particles may be a single element but alternatively, an alloy can be used.

In particular, it is preferred that at least the vicinity of the surfaces of the base particles is mainly formed of aluminium (Al). Al has low specific gravity compared with some other metal materials, which means that is unlikely to precipitate out of the ink composition and therefore it exhibits a superior glossy effect. The present inventors have found that when powder formed of Al is included in ink jet compositions, the storage stability of the ink jet compositions tends to deteriorate because oxidative changes occur over time leading to problems such as deterioration in discharge stability, which arises because of an increase in viscosity. In contrast, in the invention, it is possible to reliably prevent the occurrence of the above-described problem even when using a metal powder having a surface formed of Al. That is, the effect of the invention is particularly marked when the metal powder of the ink jet composition is obtained by surface-treating with the fluorine-based compound a metal powder, of which at least the surface is mainly formed of Al.

The base particles may be produced by any suitable method, for example, by forming a film made of a metal material through a vapor phase film formation method, and then pulverizing the film.

Accordingly, it is possible to more effectively express a metallic glossy finish in a pattern (printed portion) formed using the ink jet composition of the invention. In addition, it is possible to suppress variation in characteristics between particles. In addition, it is possible to produce suitable base particles using the method of the invention even with relatively thin metal powder.

Suitable base particles can be produced using the method of the invention, for example by forming a film made of a metal material on a base material. Suitable base materials include, for example, plastic films of polyethylene terephthalate or the like. In addition, the base material may comprise a layer of a releasing agent layer on a film deposition surface.

Pulverization of the film of metal material may be performed by applying ultrasonic vibration to the film in a liquid.

In this way, it is possible to easily and reliably obtain base particles having a particle diameter as will be described later and to reduce variation in size, shape, and characteristics among the particles.

When pulverization is performed through the above-described method, the liquid may be selected from alcohols such as methanol, ethanol, propanol, and butanol, hydrocarbon-based compounds such as n-heptane, n-octane, decane, dodecane, tetradecane, toluene, xylene, cymene, durene, indene, dipentene, tetrahydronaphthalene, decahydronaphthalene, and cyclohexylbenzene, carboxylic acid ester compounds such as ethyl acetate and butyl acetate, ester-based compounds such as ethylene glycol dimethyl ether, ethylene glycol diethyl ether, ethylene glycol methyl ethyl ether, diethylene glycol dimethyl ether, diethylene glycol diethyl ether, diethylene glycol methyl ethyl ether, propylene glycol methyl ether acetate, dipropylene glycol methyl ether acetate, ethylene glycol butyl ether acetate, ethylene glycol ethyl ether acetate, diethylene glycol monobutyl ether acetate, diethylene glycol n-butyl ether, tripropylene glycol dimethyl ether, triethylene glycol diethyl ether, tetraethylene glycol dimethyl ether, tetraethylene glycol dibutyl ether, tetraethylene glycol monobutyl ether, 1,2-dimethoxyethane, bis(2-methoxyethyl) ether, and p-dioxane, and polar compounds such as propylene carbonate, γ-butyrolactone, N-methyl-2-pyrrolidone, N,N-dimethylformamide (DMF), N,N-dimethylacetamide (DMA), dimethyl sulfoxide, cyclohexanone, and acetonitrile. By using such a liquid, it is possible to improve productivity of the base particles and metal powder while preventing unwanted oxidation of the base particles. In particular, it is possible to reduce the variation in size, shape, and characteristics among the particles.

In some cases, commercially available metal pigments (aluminum pigments and the like) may be used as the base particles. A paste-like composition containing metal powder is included in such a commercially available product. Examples of such commercially available compositions containing metal powder include Metasheen 11-0010, Metasheen 41-0010, and Metasheen 71-0010 (all are manufactured by BASF SE).

### Fluorine-Based Compound

As described above, the metal powder of the ink jet composition of the invention is surface-treated with a fluorine-based compound.

When the metal powder is surface-treated with a fluorine-based compound in this manner, and when the surface treated metal powder is used in combination with a resin comprising a styrene-maleic acid structure (to be described below), an excellent synergistic effect is obtained.

Examples of suitable fluorine-based compounds (surface treatment agents) for surface-modifying base particles include fluorine-based silane compounds and fluorine-based phosphate compounds. Fluorine-based phosphate compounds are preferred.

Accordingly, it is possible to ensure that the ink jet composition has superior storage stability and discharge stability over a long period of time and that a printed portion of the recorded matter produced using the ink jet composition has superior gloss and adhesion to a recording medium.

Suitable fluorine-based silane compounds include silane compounds having at least one fluorine atom per molecule.

In particular, it is preferred that fluorine-based silane compounds used as surface treatment agents have a chemical structure represented by Formula (4).

R¹SiX¹ₐR²₍₃₋ₐ₎ (4)

In Formula (4)):
R¹ represents:
a C₁₋₅₀ alkyl, C₂₋₅₀ alkenyl or C₂₋₅₀ alkynyl group in any of which, one or more hydrogen atoms is replaced by fluorine, up to perhalo substitution and one or more carbon atoms is optionally replaced by a linker selected from -O-, -S-, -NH-, -N=, -OC(O)- and -C(O)O- and which is optionally substituted with one or more substituents in addition to the fluoro substituents, wherein said additional substituents are selected from NH₂, OH, SH, CN or C(O)OH or 3- to 10-membered carbocyclyl, 3-10 membered heterocyclyl, 6- to 16-membered aryl or 5- to 16-membered heteroaryl ring system, any of which is optionally substituted with fluorine; or
a 3- to 10-membered carbocyclyl, 3-10 membered heterocyclyl, 6- to 16-membered aryl or 5- to 16-membered heteroaryl ring system any of which is substituted by one or more fluorine atoms, up to perhalo substitution and any of which is optionally substituted with one or more substituents in addition to the fluorine substituents, wherein said additional substituents are selected from C₁₋₁₀ alkyl, C₁₋₁₀ haloalkyl, C₂₋₁₀ alkenyl, C₂₋₁₀ haloalkenyl, C₂₋₁₀ alkynyl, C₂₋₁₀ haloalkynyl, NH₂, OH, SH, CN or C(O)OH;
X¹ represents a hydrolyzable group, an ether group, a chloro group, or a hydroxyl group;
R² represents an alkyl group having 1 to 4 carbon atoms; and
a represents an integer of 1 to 3.)

The term "hydrolyzable group" refers to a group which is capable of hydrolyzing under typical conditions. Examples of hydrolyzable groups include alkoxy groups, aryloxy groups, and alkanoyloxy groups.

In the present specification, "C₁₋₅₀ alkyl" refers to a straight or branched fully saturated hydrocarbon group having 1 to 50 carbon atoms; "C₂₋₅₀ alkenyl" refers to a straight or branched hydrocarbon group having 2 to 50 carbon atoms and containing at least one carbon-carbon double bond; "C₂₋₅₀ alkynyl" refers to a straight or branched hydrocarbon group having 2 to 50 carbon atoms and containing at least one carbon-carbon triple bond. Other alkyl, alkenyl and alkynyl groups may have different numbers of carbon atoms, e.g. C₁₋₁₀ alkyl has a chain of from 1 to 10 carbon atoms in length. The terms "haloalkyl", "haloalkenyl" and "haloalkynyl" refer respectively to alkyl, alkenyl and alkynyl groups in which one or more hydrogen atoms is replaced with a fluorine, chlorine, bromine or iodine atom, most suitably with a fluorine atom, up to perhalo substitution. The term "3- to 10-membered carbocyclyl" refers to a saturated or partially unsaturated hydrocarbon ring having from 3 to 10 ring atoms; "3-10 membered heterocyclyl" refers to a saturated or partially unsaturated ring having from 3 to 10 ring atoms and containing at least one ring heteroatom selected from N, O and S; "6- to 16-membered aryl" refers to a hydrocarbon ring system comprising a single aromatic ring or up to 4 fused rings, at least one of which is aromatic in character; "6- to 16-membered heteroaryl" refers to a ring system comprising a single aromatic ring or up to 4 fused rings, at least one of which is aromatic in character, wherein at least one ring contains at least one ring heteroatom selected from N, O and S.

Specific examples of R¹ include fluorine substituted phenyl, benzyl, phenethyl, hydroxyphenyl, chlorophenyl, aminophenyl, naphthyl group, anthracenyl, phenanthrenyl, pyrenyl, thienyl, pyrrolyl, cyclohexyl, cyclohexenyl, cyclopentyl grup, cyclopentenyl, pyridinyl, methyl, ethyl, n-propyl, isopropyl, n-butyl, isobutyl, sec-butyl, tert-butyl, octadecyl, n-octyl, chloromethyl, methoxyethyl, hydroxyethyl, aminoethyl, mercaptopropyl, vinyl, allyl, acryloxyethyl, methacryloxyethyl, glycidoxypropyl, and acetoxy in which a part or all of hydrogen atoms are replaced with fluorine, up to perhalo substitution (where possible).

In addition, R¹ of the fluorine-based silane compound preferably comprises a perfluoroalkyl structure (CₙF₂ₙ₊₁), optionally in combination with a hydrocarbon chain.

An example of the fluorine-based silane compound comprising a perfluoroalkyl structure (CₙF₂ₙ₊₁) is a fluorine-based silane compound represented by Formula (5).

CₙF₂ₙ₊₁(CH₂)ₘSiX¹ₐR²₍₃₋ₐ₎ (5)

In Formula (5):
X¹ represents a hydrolyzable group, an ether group, a chloro group, or a hydroxyl group;
R² represents an alkyl group having 1 to 4 carbon atoms:
   n represents an integer of 1 to 14;
   m represents an integer of 2 to 6: and
   a represents an integer of 1 to 3.

Specific examples of compounds of Formula (5) include CF₃-CH₂CH₂-Si(OCH₃)₃, CF₃(CF₂)₃-CH₂CH₂-Si(OCH₃)₃, CF₃(CF₂)₅-CH₂CH₂-Si(OCH₃)₃, CF₃(CF2)₅-CH₂CH₂-Si(OC₂H₅)₃, CF₃(CF2)₇-CH₂CH₂-Si (OCH₃)₃, CF₃(CF₂)₁₁-CH₂CH₂-Si(OC₂H₅)₃, CF₃(CF₂)₃-CH₂CH₂-Si(CH₃)(OCH₃)₂, CF₃(CF₂)₇-CH₂CH₂-Si(CH₃)(OCH₃)₂, CF₃(CF₂)₈-CH₂CH₂-Si(CH₃)(OC₂H₅)₂, and CF₃(CF₂)₈-CH₂CH₂-Si(C₂H₅)(OC₂H₅)₂.

Alternatively, in the fluorine-based silane compound of Formula (4), R¹ may comprise a perfluoroalkyl ether structure (CₙF₂ₙ₊₁O).

An example of such a fluorine-based silane compound is a compound represented by Formula (6).

CₚF₂ₚ₊₁O(C_{q}F_{2q}O)ᵣ(CH₂)ₘSiX₁ₐR²₍₃₋ₐ₎ (6)

In Formula (6):
X¹ represents a hydrolyzable group, an ether group, a chloro group, or a hydroxyl group;
R² represents an alkyl group having 1 to 4 carbon atoms;
p represents an integer of 1 to 4;
q represents an integer of 1 to 4;
r represents an integer of 1 to 10;
m represents an integer of 2 to 6; and
a represents an integer of 1 to 3.

Specific examples of compounds of Formula (6) include CF₃O(CF₂O)₆-CH₂CH₂-Si(OC₂H₅)₃, CF₃O(C₃F₆O)₄-CH₂CH₂-Si(OCH₃)₃, CF₃O(C₃F₆O)₂-(CF₂O)₃-CH₂CH₂-Si(OCH₃)₃, CF₃O(C₃F₆O)₈-CH₂CH₂-Si(OCH₃)₃, CF₃O(C₄F₉O)₅-CH₂CH₂-Si(OCH₃)₃, CF₃O(C₄F₉O)₅-CH₂CH₂-Si(CH₃)(OC₂H₅)2, and CF₃O(C₃F₆O)₄-CH₂CH₂-Si(C₂H₅)(OCH₃)₂.

Alternatively, a derivative of phosphoric acid having a fluorine atom in a molecule can be used as the fluorine-based phosphate compound. Suitably, the fluorine-based phosphate compound comprises a perfluoroalkyl structure (CₙF₂ₙ₊₁).

In particular, it is preferable that the fluorine-based phosphate compound has a chemical structure represented by Formula (1).

PORₙ(OH)₃₋ₙ (1)

In Formula (1):
R represents CF₃(CF₂)ₘ-, CF₃(CF₂)ₘ(CH₂)ₗ-, CF₃(CF₂)ₘ(CH₂O)ₗ-, CF₃(CF₂)ₘ(CH₂CH₂O)ₗ-, CF₃(CF₂)ₘO-, or CF₃(CF₂)ₘ(CH₂)ₗO-, n represents an integer of 1 to 3, m represents an integer of 3 to 17, and I represents an integer of 1 to 12.)

Ink jet compositions of the invention, in which the metal powder is surface treated with a fluorine-based compound as described above, have superior storage stability and discharge stability over a long period of time and printed portions of recorded matter produced using the ink jet composition have superior gloss and adhesiveness to a recording medium.

In Formula (1), m is preferably an integer of 3 to 17 and more preferably an integer of 3 to 7.

Accordingly, the above-described effect is more remarkably exhibited.

In addition, in Formula (1), I is preferably an integer of 1 to 12 and more preferably an integer of 2 to 10.

Accordingly, the above-described effect is more remarkably exhibited.

Preferably, the fluorine-based phosphate compound is at least one of CF₃(CF₂)₅(CH₂)₂P(O)(OH)₂ and CF₃(CF₂)₃(CH₂)₂P(O)(OH)₂.

Use of these fluorine-based phosphate compounds provides ink jet compositions having superior storage stability and discharge stability over a long period of time and printed portions of recorded matter produced using the ink jet composition have superior gloss and adhesiveness to a recording medium.

When the fluorine-based phosphate compound comprises a perfluoroalkyl structure (CₙF₂ₙ₊₁), the ink jet compositions produced have superior storage stability and discharge stability over a long period of time and printed portions of the recorded matter produced using the ink jet composition have superior gloss and adhesiveness to a recording medium.

Surface treatment on base particles using the above-described fluorine-based compound is usually performed by bringing the fluorine-based compound into contact with base particles in a heated environment.

The contact between base particles and the fluorine-based compound is preferably performed in a dispersion liquid comprising the base particles.

This allows the base particles and the fluorine-based compound to be brought more effectively into contact with each other, thus improving the productivity of metal powder and more effectively preventing occurrence of unwanted variations in the degree of surface treatment between portions of the base particles.

When the base particles and the fluorine-based compound are brought into contact in a dispersion liquid comprising the base particles, suitable dispersion media include, for example, alcohol compounds (monohydric alcohols such as methyl alcohol, ethyl alcohol, propyl alcohol, butyl alcohol, and isopropyl alcohol or polyhydric alcohols such as ethylene glycol and glycerin, and fluorides thereof) ketone compounds (acetone, methyl ethyl ketone, cyclohexanone, and the like), carboxylic acid ester compounds (methyl acetate, ethyl acetate, propyl acetate, butyl acetate, methyl propionate, ethyl propionate, and the like), ether compounds (diethyl ether, dipropyl ether, tetrahydrofuran, dioxane, and the like), and lactone compounds. Dispersion media comprising a single solvent or two or more solvents selected from the group consisting of diethylene glycol dimethyl ether, diethylene glycol diethyl ether, diethylene glycol methyl ethyl ether, tetraethylene glycol dimethyl ether, tetraethylene glycol dibutyl ether, tetraethylene glycol monobutyl ether, and γ-butyrolactone are preferred.

The temperature (treatment temperature) when performing surface treatment of the base particles with the fluorine-based compound is not particularly limited, but it is preferably 10°C to 75°C, more preferably 15°C to 70°C, and still more preferably 40°C to 60°C.

Accordingly, it is possible to more suitably form a bond between the base particles and the fluorine-based compound. Therefore, it is possible to improve productivity of metal powder and more effectively prevent unwanted deterioration in materials.

The amount of fluorine-based compound used when performing surface treatment of the base particles with the fluorine-based compound is not particularly limited, but is preferably 2.0 parts by mass to 10 parts by mass and more preferably 3.0 parts by mass to 6.0 parts by mass, with respect to 100 parts by mass of the base particles.

Accordingly, it is possible to subject the base particles to surface treatment at a more suitable ratio, and the above-described effect is more remarkably exhibited.

On the other hand, when the amount of fluorine-based compound used is too small, printed portions of the recorded matter produced using the ink jet composition may not have sufficient gloss, although this will also depend on other factors such as the composition used and, in particular, the content of the resin having a styrene-acrylic acid structure.

When the amount of fluorine-based compound used is too large, the amount of fluorine-based compound remaining in the ink jet composition without being bonded to the base particles increases. This tends to lead to a deterioration in the discharge stability of the ink jet composition and/or the adhesiveness of the printed portion of the recorded matter to a recording medium.

The above-described fluorine-based compound (particularly fluorine-based phosphate compound) may be used for directly treating base particles, but it is preferable that base particles are first subjected to treatment with an acid or base before being treated with a fluorine-based compound.

In this way, it is possible to achieve more reliable modification of the surface of a base particle through chemical bonding using the fluorine-based compound and to more effectively exhibit the effect of the invention. Treatment with an acid or base removes any oxide film which may have formed on the surfaces of the base particles before performing surface treatment with a fluorine-based compound. When any such oxide film is removed before performing the surface treatment with a fluorine-based compound, the metal powder product has superior gloss.

Suitable acids for treating the base particles include proton donor acids such as hydrochloric acid, sulfuric acid, phosphoric acid, nitric acid, boric acid, acetic acid, carbonic acid, formic acid, benzoic acid, chlorous acid, hypochlorous acid, sulfurous acid, hyposulfurous acid, nitrous acid, hyponitrous acid, phosphorous acid, and hypophosphorous acid. Of these, hydrochloric acid, phosphoric acid, and acetic acid are suitable.

Suitable bases for treating the base particles include sodium hydroxide, potassium hydroxide, and calcium hydroxide as bases. Of these, sodium hydroxide and potassium hydroxide are particularly suitable.

The metal powder may have any shape such as a spherical shape, a spindle shape, and a needle shape, but preferably it has a scale shape.

When the metal powder has a scale shape, it is possible to arrange the metal powder on a recording medium to which the ink jet composition is to be applied so that the main surface of the metal powder conforms to the shape of the surface of the recording medium. Therefore, it is possible to achieve more effectively the gloss originally possessed by the metal material from which the metal powder is formed in an obtained recorded matter obtained using the ink jet composition. Moreover, it is possible to make a pattern (printed portion) having superior gloss and high-grade feel and to make the recorded matter have superior abrasion resistance. If the above-described surface treatment using a fluorine-based compound (particularly a fluorine-based phosphate compound) is not performed, the tendency of the storage stability and the discharge stability of the ink jet composition to deteriorate becomes particularly conspicuous when the metal powder has a scale shape. However, in the invention, it is possible to reliably prevent the occurrence of this problem even when the metal powder has a scale shape. That is, when the shape of metal powder is in a scale shape, the effect of the invention is more remarkably exhibited.

In the invention, the term "scale shape" refers to shapes such as a flat plate shape and a curved plate shape. In particular, the ratio (S₁ / S₀) of an average particle diameter (S₁) to an average thickness (S₀) of metal powder is preferably greater than or equal to 2, more preferably greater than or equal to 5, and particularly preferably greater than or equal to 8.

The average particle diameter of the metal powder is preferably 300 nm to 1,000 nm, more preferably 350 nm to 1,000 nm, and still more preferably 400 nm to 800 nm.

When the average particle diameter is in this range, it is possible to make the recorded matter produced using the ink jet composition have superior gloss and high-grade feel. In addition, it is possible to make the ink jet composition have superior storage stability and discharge stability.

In the present specification, the "average particle diameter" refers to the size of the main surface of the metal powder, and refers to a volume-based average particle diameter (volume average particle diameter (D50)). An example of a measurement device suitable for determining average particle diameter is a laser diffraction-scattering type particle size analyzer MICROTRAC MT-3000 (manufactured by Nikkiso Co., Ltd.). Measurement of D50 using the device is performed by putting a dispersion solution containing metal powder to be measured into a circulating solvent of diethylene glycol diethyl ether at room temperature of about 25°C to dilute the metal powder to a measurable concentration, and it is possible to calculate volume-based D50 by regularly differentiating the distribution of particle diameters acquired as reflective particles on a logarithmic axis.

In addition, the average thickness of the metal powder is preferably 10 nm to 40 nm. The average thickness can be measured through the following method using an atomic force microscope. A few droplets of an aluminum pigment diluted 10 times or more with acetone are added dropwise onto a smooth glass substrate and are allowed to dry naturally for 2 hours or longer. Next, 30 points of the aluminum pigment forcibly aligned on the glass substrate were extracted using an atomic force microscope (manufactured by Seiko Instruments Inc.: "SPA400") and their thicknesses are measured through a tapping mode. Among the thicknesses of the 30 points measured, the thicknesses of the highest and lowest 3 points are excluded and an average value of the thicknesses of the remaining 24 points is obtained, which is regarded as an average thickness.

The content rate of the metal powder in the ink jet composition is preferably 0.5 mass% to 10.0 mass%, more preferably 0.7 mass% to 5.0 mass%, and still more preferably 1.0 mass% to 2.0 mass% with respect to the total mass of the ink jet composition.

### Organic Solvent

An organic solvent functions as a dispersion medium for dispersing the metal powder in the ink jet composition. The organic solvent is removed (evaporated) in the process of producing the recorded matter.

The boiling point of the organic solvent under 1 atm is preferably 100°C to 300°C and more preferably 150°C to 250°C.

Using an organic solvent with these properties makes it possible to increase the storage stability and discharge stability of the ink jet composition while producing the recorded matter in which the ink jet composition is used with sufficiently high productivity.

Any organic solvent may be used as long as it is an organic compound in a liquid state in a environment in which it is used (for example, at a normal temperature (20°C) and a normal pressure (1 atm)) of the ink jet composition. As the organic solvent, it is possible to use, for example, alcohol compounds (monohydric alcohols such as methyl alcohol, ethyl alcohol, propyl alcohol, butyl alcohol, and isopropyl alcohol, alkylene glycols such as ethylene glycol, propylene glycol, or polyhydric alcohols such as glycerin, and fluorides thereof) ketone compounds (acetone, methyl ethyl ketone, cyclohexanone, and the like), carboxylic acid ester compounds (methyl acetate, ethyl acetate, propyl acetate, butyl acetate, methyl propionate, ethyl propionate, and the like), ether compounds (diethyl ether, dipropyl ether, tetrahydrofuran, dioxane, and the like), and lactone compounds as a dispersion medium of the dispersion. In addition, it is possible to use alkylene glycol derivatives such as compounds (alkylene glycol monoether and alkylene glycol diether) in which at least one hydroxyl group contained in the above-described alkylene glycol is etherified and compounds (alkylene glycol monoester and alkylene glycol diester) in which at least one hydroxyl group contained in the above-described alkylene glycol is esterified. Hereinafter, alkylene glycol and alkylene glycol derivatives are collectively referred to as "alkylene glycol compounds".

In particular, the ink jet composition preferably contains at least one compound selected from an alkylene glycol compound and a lactone compound, as the organic solvent.

With such organic solvents, it is possible to provide an ink jet composition with superior storage stability and discharge stability. In addition, it is possible to rapidly remove a solvent from the ink jet composition after discharging through an ink jet method, and therefore, superior productivity is possible when producing recorded matter.

Examples of suitable alkylene glycol compounds include ethylene glycol, diethylene glycol, triethylene glycol, tetraethylene glycol, propylene glycol, dipropylene glycol, tripropylene glycol, and tetrapropylene glycol.

Specific examples of alkylene glycol monoethers include ethylene glycol monomethyl ether, ethylene glycol monoethyl ether, ethylene glycol monoisopropyl ether, ethylene glycol monobutyl ether, ethylene glycol monohexyl ether, ethylene glycol monophenyl ether, diethylene glycol monomethyl ether, diethylene glycol monoethyl ether, diethylene glycol monobutyl ether, triethylene glycol monomethyl ether, triethylene glycol monoethyl ether, triethylene glycol monobutyl ether, tetraethylene glycol monomethyl ether, tetraethylene glycol monoethyl ether, tetraethylene glycol monobutyl ether, propylene glycol monomethyl ether, propylene glycol monoethyl ether, dipropylene glycol monomethyl ether, and dipropylene glycol monoethyl ether.

Specific examples of alkylene glycol diethers include ethylene glycol dimethyl ether, ethylene glycol diethyl ether, ethylene glycol dibutyl ether, diethylene glycol dimethyl ether, diethylene glycol diethyl ether, diethylene glycol dibutyl ether, triethylene glycol dimethyl ether, triethylene glycol diethyl ether, triethylene glycol dibutyl ether, tetraethylene glycol dibutyl ether, tetraethylene glycol dimethyl ether, tetraethylene glycol diethyl ether, tetraethylene glycol dibutyl ether, propylene glycol dimethyl ether, propylene glycol diethyl ether, dipropylene glycol dimethyl ether, and dipropylene glycol diethyl ether.

Examples of lactone compounds that can be used as organic solvents include γ-butyrolactone, δ-valerolactone, and ε-caprolactone.

Of the above organic solvents, an organic solvent containing one or two or more selected from the group consisting of diethylene glycol dimethyl ether, diethylene glycol diethyl ether, tetraethylene glycol dimethyl ether, tetraethylene glycol dibutyl ether, tetraethylene glycol monobutyl ether, and γ-butyrolactone is preferable.

Using these solvents, it is possible to ensure that the ink jet composition has superior storage stability and discharge stability. In addition, it is possible to produce recorded matter having superior gloss and high-grade feel.

When the ink jet composition contains γ-butyrolactone, it is possible to obtain recorded matter having superior adhesiveness between a recording medium to which the ink jet composition is applied and a recorded portion formed using the ink jet composition. In addition, it is possible to make the printed portion of the recorded matter produced using the ink jet composition have superior a gloss.

The content of the organic solvent in the ink jet composition is preferably 70.0 mass% to 99.5 mass% and more preferably 80.0 mass% to 98.5 mass% with respect to the total mass of the ink jet composition.

With this solvent content, it is possible to ensure that the ink jet composition has superior storage stability and discharge stability and that the recorded matter produced using the ink jet composition has superior gloss. The ink jet composition may contain two or more compounds as organic solvents. In this case, the sum of the content rate of these compounds is preferably a value within the range set out above.

When the ink jet composition contains γ-butyrolactone, the content of γ-butyrolactone in the ink jet composition is preferably 3.0 mass% to 25.0 mass% and more preferably 5.0 mass% to 20.0 mass% with respect to the total mass of the ink jet composition.

With this content of γ-butyrolactone, it is possible to obtain a recorded matter having superior adhesiveness between a recording medium, to which the ink jet composition is applied and a recorded portion formed using the ink jet composition. In addition, it is possible to make the printed portion of the recorded matter produced using the ink jet composition have superior gloss. Furthermore, when another ink (for example, an ink containing at least one of a pigment and a dye as a colorant) is applied onto the recorded portion formed using the ink jet composition in a superimposed manner, it is possible to prevent the other ink from being repelled, such that an intended pattern is formed with high accuracy.

### Binder Resin (Binder)

The binder resin has the function of improving the adhesiveness of the metal powder to a recording medium in a recorded matter produced using an ink jet composition.

When the ink jet composition contains a binder resin, it is possible to improve durability (particularly, adhesiveness of the recorded portion to the recording medium, durability, and the like) of the recorded matter.

In particular, in the invention, the ink jet composition contains a resin having a styrene-acrylic acid structure as a binder resin.

With this binder resin, it is possible to ensure that, in the recorded matter produced using the ink jet composition, the printed portion has excellent gloss and adhesiveness to the recording medium while also providing an ink jet composition have superior storage stability and discharge stability. These excellent properties are obtained when the metal powder is surface-treated with a fluorine-based compound. When the metal powder is not surface-treated with a fluorine-based compound, the above-described excellent effect is not obtained even when a resin having a styrene-acrylic acid structure is contained in the ink jet composition.

In the invention, the resin having a styrene-acrylic acid structure (hereinafter, also referred to as a "styrene-acrylic resin") refers to a polymer formed by polymerization of at least one monomer selected from the group consisting of styrene and derivatives thereof

(hereinafter, also referred to as a "styrene-based monomer") and at least one monomer selected from the group consisting of (meth)acrylic acid and derivatives thereof (hereinafter, also referred to as a "acrylic acid-based monomer").

Examples of derivatives of styrene include a derivative in which at least one of hydrogen atoms contained in styrene is replaced with another substituent (an atom or an atomic group) such as a halogen atom or a hydrocarbon group.

Examples of derivatives of (meth)acrylic acid include:
a derivative in which at least one of hydrogen atoms bonded to carbon atoms of (meth)acrylic acid is replaced with another substituent (an atom or an aromatic group) such as an halogen atom or a hydrocarbon group;
an ester derivative; and
an amide derivative.

In particular, the styrene-acrylic resin preferably comprises a unit represented by Formula (2).

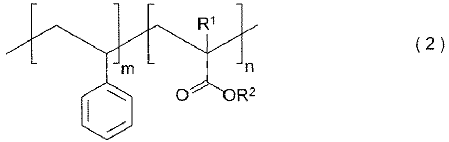

In Formula (2), R¹ represents H or CH₃;
R² represents H or a hydrocarbon group having 5 or less carbon atoms; and
n and m each independently represent an integer of 1 or more.

Accordingly, it is possible to make the ink jet composition have superior storage stability and discharge stability.

In addition, in the recorded matter produced using the ink jet composition, it is possible to make the printed portion have superior gloss and adhesiveness to a recording medium.

The ink jet composition may contain a styrene-acrylic resin in addition to the compound comprising a unit represented by Formula (2). The content of the unit represented by Formula (2) contained in the ink jet composition is preferably greater than or equal to 80 mass%, more preferably greater than or equal to 90 mass%, and still more preferably greater than or equal to 95 mass% with respect to the total mass of styrene-acrylic resin contained in the ink jet composition.

Accordingly, the above-described effect is more remarkably exhibited.

The polymer units represented by Formula (2) may be formed by polymerization of one or several kinds of styrene-based monomers and/or one or several kinds of acrylic acid-based monomers.

As noted above, R¹ in Formula (2) represents H or CH₃. Preferably, R¹ represents H.

When R¹ represents H, it is possible to make the ink jet composition have superior storage stability and discharge stability. In addition, in the recorded matter produced using the ink jet composition, it is possible to make the printed portion have superior gloss and adhesiveness to a recording medium.

As noted above, R² in Formula (2) represents H or a hydrocarbon group having 5 or less carbon atoms. Preferably, R² represents H.

When R² represents H, it is possible to make the ink jet composition have superior storage stability and discharge stability. In addition, recorded matter produced using the ink jet composition, has a printed portion with superior gloss and adhesiveness to a recording medium.

In addition, the styrene-acrylic resin may be a polymer formed by polymerization of a styrene-based monomer and an acrylic acid-based monomer as monomer components, and may contain constituent monomers (other monomers) other than the styrene-based monomer and the acrylic acid-based monomer.

However, the content rate of other monomers in all monomers constituting the styrene-acrylic resin is preferably less than or equal to 15 mol%, more preferably less than or equal to 5 mol%, and still more preferably less than or equal to 3 mol%.

In addition, the arrangement of the constituent monomers in the styrene-acrylic resin is not particularly limited.

That is, the styrene-acrylic resin (comprising the unit represented by Formula (2)) may be either a random copolymer, an alternating copolymer, a block copolymer, or a graft copolymer.

An MS/MA value (n/m value in Formula (2)) when the number of moles of the styrene-based monomer contained in the styrene-acrylic resin is set as MS [mol] and the number of moles of the acrylic acid-based monomer is set as MA [mol] preferably satisfies a relation of 0.5 ≤ MS/MA ≤ 15, more preferably satisfies a relation of 0.8 ≤ MS/MA ≤ 10, and still more preferably satisfies a relation of 1.0 ≤ MS/MA ≤ 8.0.

With an MS/MA value in this range, it is possible to make the ink jet composition have superior storage stability and discharge stability. In addition, in the recorded matter produced using the ink jet composition, it is possible to make the printed portion have superior gloss and adhesiveness to a recording medium.

The acid value of the styrene-acrylic resin is preferably 50 mgKOH/g to 330 mgKOH/g, more preferably 60 mgKOH/g to 250 mgKOH/g, and still more preferably 70 mgKOH/g to 200 mgKOH/g.

Accordingly, it is possible to make the ink jet composition have superior storage stability and discharge stability. In addition, in the recorded matter produced using the ink jet composition, it is possible to make the printed portion have superior gloss and adhesiveness to a recording medium.

The weight-average molecular weight MW of the styrene-acrylic resin is preferably 3,000 to 30,000, more preferably 4,000 to 25,000, and still more preferably 5,000 to 20,000.

Accordingly, it is possible to make the ink jet composition have superior storage stability and discharge stability. In addition, the recorded matter produced using the ink jet composition has a printed portion with superior gloss and adhesiveness to the recording medium.

The content rate of the styrene-acrylic resin in the ink jet composition is preferably 0.1 mass% to 6.0 mass% and more preferably 0.2 mass% to 5.0 mass% with respect to the total mass of the ink jet composition.

Accordingly, it is possible to provide an ink jet composition with superior storage stability and discharge stability. In addition, the recorded matter produced using the ink jet composition has a printed portion with superior gloss and adhesiveness to a recording medium.

When the content rate of the styrene-acrylic resin in the ink jet composition is set as X_{SA} [mass%] and the content rate of metal powder is set as X_{M} [mass%], 0.02 ≤ X_{SA} / X_{M} ≤ 5.00 is preferably satisfied, 0.10 ≤ X_{SA} / X_{M} ≤ 1.0 is more preferably satisfied, and 0.15 ≤ X_{SA} / X_{M} ≤ 0.55 is still more preferably satisfied.

In this way, it is possible to provide an ink jet composition with superior storage stability and discharge stability. In addition, the recorded matter produced using the ink jet composition has a printed portion with superior gloss and adhesiveness to a recording medium.

The ink jet composition may contain binder resins (other binder resins) other than the above-described styrene-acrylic resin.

Examples of such binder resins (other binder resins) include an acrylic resin, a styrene-maleic acid-based resin, a rosin-modified resin, a terpene-based resin, a polyester resin, a polyamide resin, an epoxy resin, a vinyl chloride resin, a vinyl chloride-vinyl acetate copolymer, cellulose-based resins (for example, cellulose acetate butyrate and hydroxypropyl cellulose), polyvinyl butyral, polyvinyl alcohol, and polyurethane.

When a styrene-maleic acid-based resin (a copolymer containing a styrene-based monomer and a maleic acid-based monomer (including an ester, an amide, an imide, acid anhydride, and the like) is further contained as the binder resins (other binder resins) in addition to the above-described resin having a styrene-acrylic acid structure, it is possible to make the ink jet composition have superior storage stability and discharge stability. In addition, in the recorded matter produced using the ink jet composition, it is possible to make the printed portion have superior gloss and adhesiveness to a recording medium.

The binder resins may be dispersed or dissolved in an organic solvent in the ink jet composition.

The content rate (the total content rate of the resin having the styrene-acrylic acid structure and other binder resins) of the binder resins in the ink jet composition is preferably 0.1 mass% to 6.0 mass% and more preferably 0.2 mass% to 5.0 mass% with respect to the total mass of the ink jet composition.

Accordingly, it is possible to make the ink jet composition have superior storage stability and discharge stability. In addition, in the recorded matter produced using the ink jet composition, it is possible to make the printed portion have superior gloss and adhesiveness to a recording medium.

### Surfactant

The ink jet composition may further contain a surfactant.

In particular, the ink jet composition preferably contains at least one selected from a silicone-based surfactant, a polyoxyethylene-based surfactant, a phosphoric acid-based surfactant, and acetylene diol, and more preferably contains a phosphoric acid-based surfactant.

Accordingly, aggregation of the metal powder can be more suitably prevented, and flowability of the ink jet composition is improved. As a result, it is possible to make the ink jet composition have superior storage stability and discharge stability. In addition, it is possible to more suitably arrange the metal powder on a recording medium and to make a recorded matter have superior gloss and abrasion resistance.

Examples of suitable silicone-based surfactants include polyether-modified silicone (for example, BYK-300, 306, 307; BYK Japan KK, and KF-6011, 6012, 6017, 6015, 6043; Shin-Etsu Chemical Co., Ltd.), polyester-modified silicone (for example, BYK-313, 315; BYK Japan KK), acryl-terminated polyether-modified silicone (for example, BYK-3500, 3510, 3530; BYK Japan KK) acryl-terminated polyester-modified silicone (for example, BYK-3570; BYK Japan KK), polyglycerol-modified silicone (for example, KF-6100, 6104; Shin-Etsu Chemical Co., Ltd.), aminopropyl-modified silicone (for example, KF-8015, 8020; Shin-Etsu Chemical Co., Ltd.), and amino-modified silicone (for example, KF-8004, 867S; Shin-Etsu Chemical Co., Ltd.).

Examples of suitable polyoxyethylene-based surfactants include polyoxyethylene alkyl ethers such as polyoxyethylene cetyl ether (for example, NISSAN NONION P-208; NOF CORPORATION), polyoxyethylene oleyl ether (for example, NISSAN NONION E-202S, E-205S; NOF CORPORATION), and polyoxyethylene lauryl ether (for example, EMULGEN 106, 108; Kao Corporation), polyoxyethylene alkylphenol ethers such as polyoxyethylene octylphenol ether (for example, NISSAN NONION HS-204, HS-206, HS-208; NOF CORPORATION), sorbitan monoesters such as sorbitan monocaprylate (for example, NISSAN NONION CP-08R; NOF CORPORATION) and sorbitan monolaurate (for example, NISSAN NONION LP-20R; NOF CORPORATION), and polyoxyethylene sorbitan monoesters such as polyoxyethylene sorbitan monostearate (for example, NISSAN NONION OT-221; NOF CORPORATION), polycarboxylic acid-based polymer activator (For example, FLOWLEN G-700; KYOEISHA CHEMICAL Co., LTD.), polyoxyethylene higher alcohol ether (for example, EMULGEN 707, 709; Kao Corporation), tetraglycerin oleate (for example, POEM J-4581; RIKEN VITAMIN CO., LTD.), nonylphenol ethoxylate (for example, ADEKA TOL NP-620, NP-650, NP-660, NP-675, NP-683, NP-686; ADEKA CORPORATION) aliphatic phosphoric acid ester (for example, ADEKA COL CS-141E, TS-230E; ADEKA CORPORATION), sorbitan sesquioleate (for example, SORGEN 30; DKS Co. Ltd.), sorbitan monooleate (for example, SORGEN 40; DKS Co. Ltd.), polyethylene glycol sorbitan monolaurate (for example, SORGEN TW-20; DKS Co. Ltd.), and polyethylene glycol sorbitan monooleate (for example, SORGEN TW-80; DKS Co. Ltd.).

It is possible to use, for example, PLYSURF A212C, PLYSURF A215C, PLYSURF A208F, PLYSURF M208F, PLYSURF A208N, PLYSURF A208B, PLYSURF A219B, and PLYSURF A210D (DKS Co. Ltd.); DISPARLON DA-325, DISPARLON DA-375, DISPARLON DA-234, DISPARLON 1850, DISPARLON PW-36 (Kusumoto Chemicals, Ltd.); and DISPERBYK-102 (manufactured by BYK Japan KK) as the phosphoric acid-based surfactant.

It is possible to use, for example, SURFYNOL 104, 82, 465, 485, or TG (all are available from Air Products and Chemicals, Inc.), OLFINE STG and OLFINE E1010 (all are trade names manufactured by Nissin Chemical Co., Ltd.) as acetylene diol.

When the ink jet composition contains a surfactant, the content rate of the above-described surfactant in the ink jet composition is preferably 0.01 mass% to 5.0 mass% and more preferably 0.1 mass% to 2.0 mass% with respect to the total mass of the ink jet composition.

Accordingly, it is possible to make the ink jet composition have superior storage stability and discharge stability and to make the recorded matter produced using the ink jet composition have a superior gloss. The ink jet composition may contain two or more compounds as the above-described surfactant. In this case, the sum of the content rate of these compounds is preferably a value within the range set out above.

### Other Components

The ink jet composition of the invention may contain components (other components) other than those described above. Examples of such components include a slipping agent (leveling agent), a dispersant, a penetration enhancer, a moistening agent (moisturizer), a pH adjuster, colorants (pigments, dyes), a matting agent, waxes, an antibacterial agent, a preservative, an antioxidant, a chelating agent, a thickener, and a sensitizer (sensitizing dye).

When the ink jet composition contains a slipping agent, the surface of the recorded matter becomes smooth through a leveling action, and the abrasion resistance is improved.

The slipping agent is not particularly limited, but it is possible to use, for example, a silicone-based surfactant such as polyester-modified silicone or polyether-modified silicone, and it is preferable to use polyether-modified polydimethylsiloxane or polyester-modified polydimethylsiloxane.

The viscosity of the ink jet composition of the invention at room temperature (20°C) is preferably less than or equal to 20 mPa·s and more preferably 1 mPa·s to 15 mPa·s.

Accordingly, it is possible to suitably discharge liquid droplets through the ink jet method.

The viscosity can be obtained by measurement using a vibration-type viscometer in compliance with JIS Z8809.

### Recorded Matter

Next, the recorded matter of the invention will be described.

The recorded matter of the invention includes a recording medium and a recorded portion formed using the ink jet composition according to the invention as described above.

In other words, the recorded matter of the invention includes a recording medium and a recorded portion made of a material containing metal powder surface-treated with a fluorine-based compound and a styrene-acrylic resin.

Such a recorded matter has a pattern (printed portion) having excellent gloss and durability.

Any recording medium may be used and it is possible to suitably use, for example, paper (plain paper, exclusive paper for ink jet, art coated paper, and the like), and a recording medium made of a plastic material such as vinyl chloride or propylene carbonate.

The recorded matter of the invention may be used for any purpose, for example, it may be applied to ornaments or other products. Specific examples of the recorded matter of the invention include vehicle interior articles such as a console lid, a switch base, a center cluster, an interior panel, an emblem, a center console, and a meter nameplate, operation portions (key switches) of various electronic devices, an indoor advertisement, a confectionery gift box, a cosmetic box, an outdoor advertisement such as a tarpaulin, a decorative portion exhibiting decorativeness, and display objects such as an indicator or a logo.

It is possible to use an piezo system, a system of discharging ink by bubbles generated by heating the ink, or the like as a liquid droplet discharge system (system of the ink jet method), but an piezo system is preferable from the viewpoint that the ink jet composition hardly deteriorates.

The discharge of the ink jet composition through the ink jet method can be performed using a well-known liquid droplet discharge device.

The ink jet composition discharged toward a recording medium through the ink jet method loses fluidity of a formed printed portion and has a stabilized shape through removal of an organic solvent.

When removing an organic solvent, decompression treatment or heat treatment may be performed.

Accordingly, it is possible to increase the efficiency of removing the organic solvent and to make a recorded matter have superior productivity. In addition, it is possible to further improve durability of the recorded matter.

Although the invention has been described based on preferred embodiments, the invention is not limited thereto.

### Examples

Next, specific examples of the invention will be described.

### [1] Production of Ink Jet Composition

### Example 1

First, Metasheen 41-0010 (manufactured by BASF SE) was prepared as a paste-like composition containing aluminum powder as scale-like metal powder.

After diluting this composition with diethylene glycol diethyl ether (DEDG), ultrasonic vibration of 40 kHz or less was applied to pulverize the aluminum powder.

Next, the dispersion liquid containing the pulverized aluminum powder was heated to 50°C, CF₃(CF₂)₅(CH₂)₂P(O)(OH)₂ as a fluorine-based compound was added to the dispersion liquid, and the mixture was stirred for 3 hours to perform surface treatment on the aluminum powder using a fluorine-based phosphate compound. At this time, the addition amount of the fluorine-based phosphate compound with respect to 100 parts by mass of the aluminum powder was set to 5.0 parts by mass.

Next, the dispersion liquid was cooled to room temperature (20°C). Then, DISPERBYK-102 (manufactured by BYK Japan KK) as a phosphoric acid-based surfactant and BYK-3500 (manufactured by BYK Japan KK) as a silicone-based surfactant were added thereto, and the mixture was stirred at 150 rpm for 1 hour.

Thereafter, aluminum powder subjected to surface treatment was filtered out from the dispersion liquid using a filter having a pore diameter of 3 µm. At this time, the addition amount of the phosphoric acid-based surfactant with respect to 100 parts by mass of the aluminum powder was set to 20.0 parts by mass.

The aluminum powder filtered out was mixed with a mixed solvent of diethylene glycol diethyl ether (DEDG), γ-butyrolactone (y-BL), and tetraethylene glycol monobutyl ether (BTGH). A 10 mass% diethylene glycol diethyl ether (DEDG) solution X-1 (manufactured by SEIKO PMC CORPORATION, acid value of 110, MW 18,000) (where R¹ in Formula (2) represents H, R² represents H, and an n/m value is 1.0) as a resin having a styrene-acrylic acid structure was added thereto and the mixture was stirred at 150 rpm for 1 hour to obtain an ink jet composition having a composition shown in Table 1.

### Examples 2 to 17

Ink jet compositions were produced in the same manner as in Example 1 except that the configuration (the composition of base particles and the kind of compound (fluorine-based compound) used for surface treatment) of metal particles was set as shown in Tables 1 and 2 and the ink jet compositions have compositions shown in Tables 1 and 2 by changing the kinds and proportions of raw materials used for preparing the ink jet compositions. Comparative Example 1

An ink jet composition was prepared in the same manner as in Example 1 except that particles made of Al which had not been subjected to surface treatment were used as metal powder.

### Comparative Example 2

An ink jet composition was produced in the same manner as in Example 1 except that metal powder was obtained by performing surface treatment using CH₃(CH₂)₇P(O)(OH)₂, which is not a fluorine-based compound, instead of the fluorine-based compound. Comparative Example 3

An ink jet composition was prepared in the same manner as in Example 1 except that no binder resin was used.

### Comparative Example 4

An ink jet composition was prepared in the same manner as in Example 1 except that cellulose acetate butyrate was used as the binder resin instead of the styrene-acrylic resin.

For each example and comparative example, the composition and the like of the ink jet composition are collectively shown in Tables 1 and 2. In the tables, CF₃(CF₂)₅(CH₂)₂P(O)(OH)₂ is represented by "S1", CF₃(CF₂)₃(CH₂)₂P(O)(OH)₂ is represented by "S2", CF₃(CF₂)₅(CH₂)₂P(O)(OH)(OCH₂CH₃) is represented by "S3", CF₃(CF₂)₃(CH₂)₃P(O)(OH)(OCH₂CH₃) is represented by "S4", CF₃(CF₂)₅(CH₂)₂O-P(O)(OH)(OC₂H₅) is represented by "S5",
CF₃-CH₂CH₂-Si(OCH₃)₃ is represented by "S6",
CH₃(CH₂)₇P(O)(OH)₂ is represented by "S'1",
diethylene glycol diethyl ether is represented by "DEDG",
γ -butyrolactone is represented by "γ-BL",
tetraethylene glycol monobutyl ether is represented by "BTGH",
tripropylene glycol monomethyl ether is represented by "MFTG",
X-1 (manufactured by SEIKO PMC CORPORATION, an acid value of 110, MW 18,000) as a styrene-acrylic resin is represented by "SA1",
RS1191 (manufactured by SEIKO PMC CORPORATION, an acid value of 280, MW 6,500) as a styrene-acrylic resin is represented by "SA2",
YS1274 (manufactured by SEIKO PMC CORPORATION, an acid value of 200, MW 19,000) as a styrene-acrylic resin is represented by "SA3",
US1071 (manufactured by SEIKO PMC CORPORATION, an acid value of 75, MW 10,000) as a styrene-maleic resin is represented by "SA4", and
cellulose acetate butyrate is represented by "CAB".
In addition, regarding Example 12 in the tables, the content rate of each element is expressed in a weight ratio with respect to the composition of the constituent material of base particles. In addition, the average particle diameter (S₁), the average thickness (S₀), and the ratio (S₁ / S₀) thereof of each metal powder particle were measured by the above-described method and are collectively shown in Tables 1 and 2. In addition, the viscosities of the ink jet compositions of the examples measured using a vibration type viscometer in accordance with JIS Z8809 at 20°C are all within a range of 1 mPa·s to 15 mPa·s.

**Table 1**

| | Configuration of metal powder | | | | | | Configuration of ink jet composition | | | | | |
|---|---|---|---|---|---|---|---|---|---|---|---|---|
| | Base particles | Surface treatment agent | | S1/S0 | Average particle diameter [nm] | Thickness [nm] | Metal powder | Organic solvent | | Binder resin | | |
| | Constituent material | Type | Used amount [parts by mass] with respect to 100 parts by mass of base particles | | | | Content rate [parts by weight] | | Content rate [parts by weight] | | Content rate [parts by weight] | Xsa/Xm |
| Example 1 | Al | S1 | 5.0 | 22.5 | 450 | 20.0 | 1.5 | DEDG / γ-BL / BTGH | 72.4/15/10 | SA1 | 0.5 | 0.33 |
| Example 2 | Al | S2/S4 | 4.5/0.5 | 24.1 | 470 | 19.5 | 1.5 | DEDG / γ-BL / BTGH | 72.4/15/10 | SA1 | 0.5 | 0.33 |
| Example 3 | Al | S3/S5 | 4.5/0.5 | 24 | 483 | 20.1 | 1.5 | DEDG / γ-BL / BTGH | 72.4/15/10 | SA1 | 0.5 | 0.33 |
| Example 4 | Al | S6 | 5.0 | 23.5 | 465 | 19.8 | 1.5 | MEDG/γ-BL/MFTH | 72.4/15/10 | SA1 | 0.5 | 0.33 |
| Example 5 | Al | S1 | 5.0 | 24.3 | 491 | 20.2 | 1.5 | DEDG / γ-BL / BTGH | 72.4/15/10 | SA2 | 0.5 | 0.33 |
| Example 6 | Al | S1 | 5.0 | 23.3 | 464 | 19.9 | 1.5 | DEDG / γ-BL / BTGH | 72.4/15/10 | SA3 | 0.5 | 0.33 |
| Example 7 | Al | S1 | 5.0 | 22.6 | 445 | 19.7 | 1.5 | DEDG / γ-BL / BTGH | 72.4/15/10 | SA1/SA4 | 0.25/0.25 | 0.33 |
| Example 8 | Al | S1 | 5.0 | 14.9 | 298 | 20.0 | 1.5 | DEDG / γ-BL / BTGH | 72.4/15/10 | SA1 | 0.5 | 0.33 |
| Example 9 | Al | S1 | 5.0 | 50.9 | 1013 | 19.9 | 1.5 | DEDG / γ-BL / BTGH | 72.4/15/10 | SA1 | 0.5 | 0.33 |
| Example 10 | Al | S1 | 5.0 | 56.2 | 1108 | 19.7 | 1.5 | DEDG / γ-BL / BTGH | 72.4/15/10 | SA1 | 0.5 | 0.33 |

**Table 2**

| | Configuration of metal powder | | | | | | Configuration of ink jet composition | | | | | |
|---|---|---|---|---|---|---|---|---|---|---|---|---|
| | Base particles | Surface treatment agent | | S1/S0 | Average particle diameter [nm] | Thickness [nm] | Metal powder | Organic solvent | | Binder resin | | |
| | Constituent material | Type | Used amount [parts by mass] with respect to 100 parts by mass of base particles | | | | Content rate [parts by weight] | | Content rate [parts by weight] | | Content rate [parts by weight] | Xsa/Xm |
| Example 11 | Al | S1 | 5.0 | Spherical | 488 | - | 1.5 | DEDG / γ-BL / BTGH | 72.4/15/10 | SA1 | 0.5 | 0.33 |
| Example 12 | Cu90Zn10 | S1 | 5.0 | 23.8 | 479 | 20.1 | 1.5 | DEDG / γ-BL / BTGH | 72.4/15/10 | SA1 | 0.5 | 0.33 |
| Example 13 | Al | S1 | 5.0 | 23.4 | 468 | 20.0 | 1.5 | DEDG / γ-BL / BTGH | 72.4/15/10 | SA1 | 0.02 | 0.013 |
| Example 14 | Al | S1 | 5.0 | 24.8 | 491 | 19.8 | 1.5 | DEDG / γ-BL / BTGH | 72.4/15/10 | SA1 | 0.03 | 0.020 |
| Example 15 | Al | S1 | 5.0 | 23.8 | 483 | 20.3 | 1.5 | DEDG / γ-BL / BTGH | 72.4/15/10 | SA1 | 4.5 | 3.0 |
| Example 16 | Al | S1 | 5.0 | 24 | 477 | 19.9 | 1.5 | DEDG / γ-BL / BTGH | 72.4/15/10 | SA1 | 7.5 | 5.0 |
| Example 17 | Al | S1 | 5.0 | 25 | 503 | 20.1 | 1.5 | DEDG / γ-BL / BTGH | 72.4/15/10 | SA1 | 9.0 | 6.0 |
| Comparative Example 1 | Al | - | - | 25 | 492 | 19.7 | 1.5 | DEDG / γ-BL / BTGH | 72.4/15/10 | SA1 | 0.5 | 0.33 |
| Comparative Example 2 | Al | S'1 | 5.0 | 25 | 492 | 19.7 | 1.5 | DEDG / γ-BL / BTGH | 72.4/15/10 | SA1 | 0.5 | 0.33 |
| Comparative Example 3 | Al | S1 | 5.0 | 24.1 | 489 | 20.3 | 1.5 | DEDG / γ-BL / BTGH | 72.4/15/10 | - | - | 0 |
| Comparative Example 4 | Al | S1 | 5.0 | 24.1 | 489 | 20.3 | 1.5 | DEDG / γ-BL / BTGH | 72.4/15/10 | CAB | 0.5 | 0.33 |

### [2] Evaluation of Ink Jet Composition

### [2-1] Evaluation of Stability of Discharging Liquid Droplets (Evaluation of Discharge Stability)

Evaluation was performed through tests shown below using the ink jet compositions of the examples and comparative examples immediately after production.

First, a commercially available recording device SC-S80650 (manufactured by Seiko Epson Corp.) installed in a chamber (thermal chamber) and the ink jet compositions of the examples and comparative examples were prepared. Solid printing was performed on a graphic film (manufactured by 3M, IJ40-10R) as a recording medium in an environment of 25°C and 55%RH with a resolution of 720 × 1440 dpi and a drying temperature of 45°C, and evaluation was performed for the ink jet compositions according to the following criteria. Nozzle abnormality (number of times of falling out or bending) in a direction perpendicular to a media feeding direction which appears in 1 inch in all directions in a printed region 5 minutes after the start of printing.
A: The incidence of falling out of a nozzle is less than 2%.
B: The incidence of falling out of a nozzle is greater than or equal to 2% and less than 5%.
C: The incidence of falling out of a nozzle is greater than or equal to 5% and less than 10%.
D: The incidence of falling out of a nozzle is greater than or equal to 10% and less than 20%.

### [3] Production of Recorded Matter

Recorded matters were produced as follows using the ink jet compositions of the examples and the comparative examples.

First, a commercially available recording device SC-S80650 (manufactured by Seiko Epson Corp.) installed in a chamber (thermal chamber) and the ink jet compositions of the examples and comparative examples were prepared. Solid printing was performed on graphic films (manufactured by 3M, IJ40-10R) as recording media with a resolution of 720 × 1440 dpi.

Thereafter, the printed matters were subjected to heat treatment (heating and drying) at 50°C for 30 seconds, and was then allowed to stand at room temperature (20°C) for 48 hours (natural drying) to obtain recorded matters.

10 recorded matters were produced through the above-described method using the ink jet compositions of the examples and comparative examples.

### [4] Manufacture of Recorded Matter

The following evaluation was performed for the recorded matters obtained as described above.

### [4-1] Glossiness at 60°

For the printed surfaces of the recorded matters produced in the examples and comparative examples, the glossiness at a tilt angle of 60° was measured using a gloss meter (MINOLTA MULTI GLOSS 268), and evaluation was performed according to the following criteria.
A: The glossiness is greater than or equal to 400.
B: The glossiness is greater than or equal to 350 and less than 400.
C: The glossiness is greater than or equal to 250 and less than 350.
D: The glossiness is greater than or equal to 150 and less than 250.

### [4-2] Adhesiveness

SELLOTAPE (registered trademark) pieces No. 405 (manufactured by NICHIBAN CO., LTD.) were stuck on the printed surfaces of the recorded matters of the examples and comparative examples, and the surface of the tape pieces were rubbed 10 times using a GAKUSHIN-type color fastness rubbing tester AB-301 (manufactured by TESTER SANGYO CO., LTD.) under a load of 200 gf.

Thereafter, the tape pieces were peeled under the conditions of a peeling angle of 180° and a peeling speed of 1 m/minute, the glossiness (at a tilt angle of 60°) for the areas in which the tape pieces on the recorded matters were peeled was measured through the same method described in [4-1], the reduction rates of the glossiness before and after the test were obtained, and evaluation was performed according to the following criteria.
A: The reduction rate of the glossiness is less than 8%.
B: The reduction rate of the glossiness is greater than or equal to 8% and less than 16%.
C: The reduction rate of the glossiness is greater than or equal to 16% and less than 26%.
D: The reduction rate of the glossiness is greater than or equal to 26%.

### [4-3] Weather Resistance

The recorded matters (which had not been subjected to the test of [4-2]) of each of the examples and the comparative examples were put into a chamber of XENON WEATHER METER (manufactured by Suga Test Instruments Co., Ltd.) and a cycle test of "light irradiation for 40 minutes" -> "light irradiation + water rainfall for 20 minutes" -> light irradiation for 60 minutes" -> "water rainfall for 60 minutes" was performed under the test condition of 60 W/m² (300 to 400 nm). This cycle test was continuously performed for 2 weeks, and the recorded matters were taken out after 2 weeks. Then, the taken-out recorded matters were allowed to stand for 1 hour in a general environment. After the standing, the glossiness (at a tilt angle of 60°) for the printed portions of each of the recorded matters produced above was measured through the same method described in [4-1], the reduction rates of the glossiness before and after the test were obtained, and evaluation was performed according to the following criteria.
A: The reduction rate of the glossiness is less than 8%.
B: The reduction rate of the glossiness is greater than or equal to 8% and less than 16%.
C: The reduction rate of the glossiness is greater than or equal to 16% and less than 26%.
D: The reduction rate of the glossiness is greater than or equal to 26% and less than 33%.

These results are shown in Table 3.

**Table 3**

| | Discharge stability | Glossiness at 60° | Adhesiveness | Abrasion resistance |
|---|---|---|---|---|
| Example 1 | A | A | A | A |
| Example 2 | A | A | A | A |
| Example 3 | A | B | A | A |
| Example 4 | A | B | A | A |
| Example 5 | A | A | A | A |
| Example 6 | A | A | A | A |
| Example 7 | A | A | A | A |
| Example 8 | A | B | A | A |
| Example 9 | A | A | A | A |
| Example 10 | B | A | A | A |
| Example 11 | A | C | A | A |
| Example 12 | A | B | A | A |
| Example 13 | A | A | B | B |
| Example 14 | A | A | A | A |
| Example 15 | A | A | A | A |
| Example 16 | A | A | A | A |
| Example 17 | B | B | A | A |
| Comparative Example 1 | D | D | A | A |
| Comparative Example 2 | D | D | A | A |
| Comparative Example 3 | A | A | D | D |
| Comparative Example 4 | A | A | D | D |

## Claims

1. An ink jet composition discharged by an ink jet method, comprising:
metal powder;
an organic solvent; and
a binder resin comprising a styrene-acrylic acid structure,
wherein the metal powder has been surface-treated with a fluorine-based compound.

2. The ink jet composition according to Claim 1, wherein the metal powder is obtained by surface-treating with the fluorine-based compound a powder, of which at least a surface is mainly formed of aluminium (Al).

3. The ink jet composition according to Claim 1 or Claim 2, wherein the metal powder has a scale shape.

4. The ink jet composition according to any one of claims 1 to 3, wherein the fluorine-based compound is a fluorine-based phosphate compound.

5. The ink jet composition according to Claim 4, wherein the fluorine-based phosphate compound has a chemical structure represented by Formula (1)
PORₙ(OH)₃₋ₙ (1)
wherein:
R represents CF₃(CF₂)ₘ-, CF₃(CF₂)ₘ(CH₂)ₗ-, CF₃(CF₂)ₘ(CH2O)ₗ-, CF₃(CF₂)ₘ(CH₂CH₂O)ₗ-, CF₃(CF₂)ₘO-, or CF₃(CF₂)ₘ(CH₂)ₗO-;
n represents an integer of 1 to 3;
m represents an integer of 3 to 17; and
I represents an integer of 1 to 12.

6. The ink jet composition according to Claim 4 or Claim 5, wherein the fluorine-based phosphate compound comprises at least one of CF₃(CF₂)₅(CH₂)₂P(O)(OH)₂ and CF₃(CF₂)₃(CH₂)₂P(O)(OH)₂.

7. The ink jet composition according to any one of claims 1 to 6, wherein the volume average particle diameter of the metal powder is 300 nm to 1,000 nm.

8. The ink jet composition according to any one of claims 1 to 7, wherein the resin having the styrene-acrylic acid structure comprises a unit represented by Formula (2) 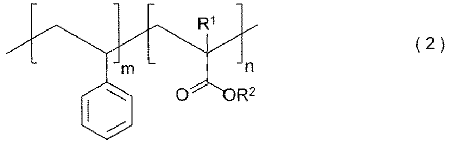 wherein:
R¹ represents H or CH₃;
R² represents H or a hydrocarbon group having 5 or less carbon atoms; and
n and m each independently represent an integer of 1 or more.

9. The ink jet composition according to any one of claims 1 to 8, wherein a relation of 0.02 ≤ X_{SA} / X_{M} ≤ 5.00 is satisfied;
wherein the content of the resin having the styrene-acrylic acid structure in the ink jet composition is set as X_{SA} [mass%]; and
the content of the metal powder in the ink jet composition is set as X_{M} [mass%].

10. The ink jet composition according to any one of claims 1 to 9, further comprising: at least one compound selected from an alkylene glycol compound and a lactone compound, as the organic solvent.

11. A recorded matter comprising:
a recording medium; and
a recorded portion formed using the ink jet composition according to any one of claims 1 to 10.
